# EUROPEAN PATENT APPLICATION

(11) **EP 2 192 773 A1**
(43) Date of publication of application: **02.06.2010**
(21) Application number: 08170394.4
(22) Date of filing: 01.12.2008
(51) Int. Cl.: H04N 7/167, H04N 5/00, G06F 21/00

(54) **Content decryption device and encryption system using an additional key layer**

(71) Applicant: Irdeto Access B.V., 2132 HD Hoofddorp (NL)
(72) Inventor: Schipper, Robert, 5509 NX, Veldhoven (NL)
(74) Representative: van Looijengoed, Ferry Antoin Theodorus

(57) **Abstract**

The invention relates to content decryption device for receiving a signal comprising encrypted content data and conditional access data. The conditional access data comprises one or more first keys. The content data is encrypted under one or more second keys. The device is configured for communicating with a secure module. The device comprises a signal input for receiving the signal from a head-end system and is configured for providing at least a portion of the conditional access data to the secure module to obtain the one or more first keys from the conditional access data. The device also has a decrypter, preferably a hardware descrambler, comprising a signal input for receiving at least the encrypted content data. The decrypter is configured for decrypting the encrypted content data under the one or more second keys to provide decrypted content data. A key provider, preferably a hardware component, is provided in the device configured for receiving the one or more first keys from the secure module and for providing the one or more second keys to the decrypter using the one or more first keys,

## Description

### FIELD OF THE INVENTION

Generally, the invention relates to the field of conditional access to content using content encryption/scrambling and content decryption/descrambling. More specifically, the invention relates to an encryption system and a content decryption device for providing and receiving a signal comprising content data and conditional access data.

### BACKGROUND OF THE INVENTION

Conditional access systems are well known and widely used in conjunction with currently available pay television systems. At present, such systems are based on the transmission of services encrypted with control words that are received by subscribers having a set-top box and a smart card that is used to store entitlements to view the services in one or more packages. The broadcast stream further contains entitlement management messages and entitlement control messages, which are necessary to decrypt the broadcast services.

The control word (or encryption key) is the primary security mechanism for protecting the service data and is changed/cycled relatively frequently, e.g. every ten seconds. Entitlement control messages are used to carry the control word in encrypted form, and are therefore also sent frequently.

In contrast, entitlement management messages (EMM's), also referred to as key management messages (KMMs), are used to convey the secret keys used to decrypt the ECMs to extract the control word, and to decrypt other data related to the addition or removal of viewing/usage rights, and other user-specific data. As such there are different kinds of EMMs, which are sent with varying degrees of frequency, but invariably somewhat slower or much slower than the frequency at which ECMs are sent.

Thus, in order to provide a secure conditional access system, a layered approach is used to prevent hackers from unauthorized access to the content.

A continuous battle exists between conditional access providers and hackers, the forme continuously improving the security measures and the latter trying to hack the security barriers and to gain unauthorised access to the content. Thus, there is a continuous need for improving security any to do this in a technically and economically feasible manner.

### SUMMARY OF THE INVENTION

It is an object of the invention to provide a content decryption device and a content encryption system of improved security.

A content decryption device for receiving a signal comprising encrypted content data and conditional access data is disclosed. The conditional access data comprises one or more first keys. The content data is encrypted under one or more second keys. The device is configured for communicating with a secure module. The device comprises a signal input for receiving the signal, directly or indirectly, from a head-end system and is configured for providing at least a portion of the conditional access data to the secure module to obtain the one or more first keys from the conditional access data. The device also has a decrypted, preferably a hardware descrambler or a software descrambler using hardware acceleration, comprising a signal input for receiving at least the encrypted content data. The decrypter is configured for decrypting the encrypted content data under the one or more second keys to provide decrypted content data. A key provider, preferably a hardware component, is provided in the device configured for receiving the one or more first keys from the secure module and for providing the one or more second keys to the decrypter using the one or more first keys.

Furthermore, an encryption system is disclosed for providing a signal comprising encrypted content data, encrypted under one or more second keys, and conditional access data, comprising one or more first keys, to the content decryption device. The content decryption device is configured for communicating with a secure module. The encryption system comprises an entitlement management message generator configured for generating entitlement management messages comprising one or more third keys for the secure module, the one or more third keys allowing the secure module to obtain the first keys. The encryption system also comprises a first key generator configured for generating the first keys and a first entitlement control message generator configured for generating first entitlement control messages comprising one or more of the first keys. Furthermore, the encryption system comprises a second key generator configured for generating the second keys and a second entitlement control message generator configured for generating second entitlement control messages comprising one or more of the second keys, the second keys being encrypted under the first keys. The encryption system further comprises an encrypter for encrypting the content data under the second keys and a transmitter for transmitting the signal to the content decryption device, the signal at least comprising the encrypted content data and the first and second entitlement control messages.

As an alternative to the encryption system defined in the preceding paragraph, an encryption system for providing a signal comprising encrypted content data and conditional access data to the content decryption device is disclosed. The content decryption device is configured for communicating with a secure module and for generating one or more second keys in accordance with a predetermined algorithm for decrypting said encrypted content data. The encryption system comprises a first key generator configured for generating first keys and means for running the predetermine algorithm to obtain the one or more second keys, using these first keys. A first entitlement control message generator is provided that is configured for generating first entitlement control messages comprising one or more of the first keys as well as an encrypter for encrypting the content data under the second keys. A transmitter is provided for transmitting the signal, the signal being free of said second keys.

The applicant also proposes a system comprising one of the alternative encryption systems and a plurality of content decryption devices.

The gist of the present invention resides in providing an additional key layer within the signal between the control words (defined above as the second keys) normally contained in entitlement control messages (ECM's) and a service key or product key normally contained in entitlement, management messages (EMM's). The additional key layer, using the above defined first keys, enhances security since more keys should be obtained before the content data can be accessed. By implementing the additional layer within the content decryption device on the receiving side, additional processing power in the secure module is not required. Use can be made of software temper resistance techniques for the content decryption device to obscure the additional layer from easy access by hackers.

The content decryption device may e.g. be a set-top box or a conditional access module implemented in a device, such as a set-top box or a television.

It should be noted that in the present application the terms encrypting and scrambling respectively decrypting and descrambling are taken to denote identical operations.

It should also be appreciated that the secure module can be a. physical device, e.g. provided as a tamper-proof or tamper-evident device with an integrated circuit, such as a smart card. However, a secure module can also be a software module within the content decryption device, made relatively tamper proof, for example, by code obfuscation or other such techniques. The secure module has a higher level of security than the content decryption device, due to protective features additional to those of the device. The key provider in the content decryption device may use similar forms of protection as the secure module.

Over time, the inclusion of sophisticated business features in the secure module has eroded the available computing resources of the secure module for basic key management tasks. This has adversely affected key cycling rates and, accordingly, security. The embodiments of the invention as defined in claims 2 and 10 allow for a higher cycling rate of the second keys (the control words) while no additional processing is required from the secure module, since the second keys are only obtained and processed within the content decryption device. The cycling rate of the first keys, requiring processing in the secure module, should not be increased, thereby saving processing power for performing other tasks.

The second keys (the control words) can be obtained using the first keys in a variety of ways.

The embodiments of claims 3 and 11 define the implementation of an extra stream comprising the first keys in the signals, the first keys bering used to encrypt and decrypt the ECM's (containing the second keys). The second keys can be obtained using any decrypter in the content decryption device.

The embodiment of claim 4 defines an advantageous manner for obtaining the second keys from a data packet, wherein each second key is encrypted using a corresponding first key (although a first key may correspond to multiple second keys). In this embodiment, all the payload data is decrypted using a first key. This results in only a part of the payload data being recognized, e.g. from a bit pattern in a header (a sync pattern), as a second decryption key after decryption, which recognized part can be subsequently selected for the decryption operation of the content data. The content decryption device is configured for selecting the first key to be used for decrypting the encrypted data packet to obtain said one or more second keys in dependence of a program selected for said content data, i.e. the first key used for obtaining this second decryption key is selected on the basis of a selected program for which the content data should be decrypted.

The second keys for factual decryption of the content data are not necessarily included within the signal, i.e. the broadcast stream, but may be generated within the content decryption device as defined in the embodiment of claim 5.

Examples include where the first key is used as a seed for a Pseudo Random Number Generator in the content decryption device to generate a sequence of second keys. Alternatively, the first key is subjected to a transformation function, performed in the content decryption device, to produce a second key. Successive second keys result from using different transformations. Moreover, the first key may be transformed in the content decryption device by combining it with data from the signal (e.g. a code book where the first key is used to pick a second key, or a bit vector which is XOR-ed with the first key).

The embodiments of claims 6 and 7 allow the content decryption device to be used with legacy encryption systems. Some signalling is required to inform the content decryption device which of the options is used for a particular service, The signalling can come from the smart card or can be included in metadata carried with the signal.

Methods for operating the content decryption device as well as methods for operating the alternative encryption systems as defined above as well as computer programs and data carriers, containing these computer programs, comprising software code portions configured for, when executed in the content decryption device, respectively, the encryption system(s), for performing the steps of these methods are also disclosed.

A new and inventive data packet is also disclosed.

Hereinafter, an embodiment of the invention will be described in further detail. It should be appreciated, however, that this embodiment may not be construed as limiting the scope of protection for the present invention.

### BRIEF DESCRIPTION OF THE DRAWINGS

In the drawings:
FIG. 1 is a schematic illustration of a system comprising an encryption system and a content decryption device according to an embodiment of the invention;
FIGS. 2A and 2B depict, respectively, key layer diagrams of a prior art system and a system according to an embodiment of the invention;
FIG. 3 is a schematic illustration of an encryption system as depicted in FIG. 1 according to an embodiment of the invention;
FIGS. 4A and 4B are a schematic illustration of a content decryption device as depicted in FIG. 1 according to an embodiment of she invention; and
FIG. 5 shoes a method of encrypting and decrypting a single data packet of the signal of the encryption system of FIG. 3 according to an embodiment of the invention.

### DETAILED DESCRIPTION OF THE DRAWINGS

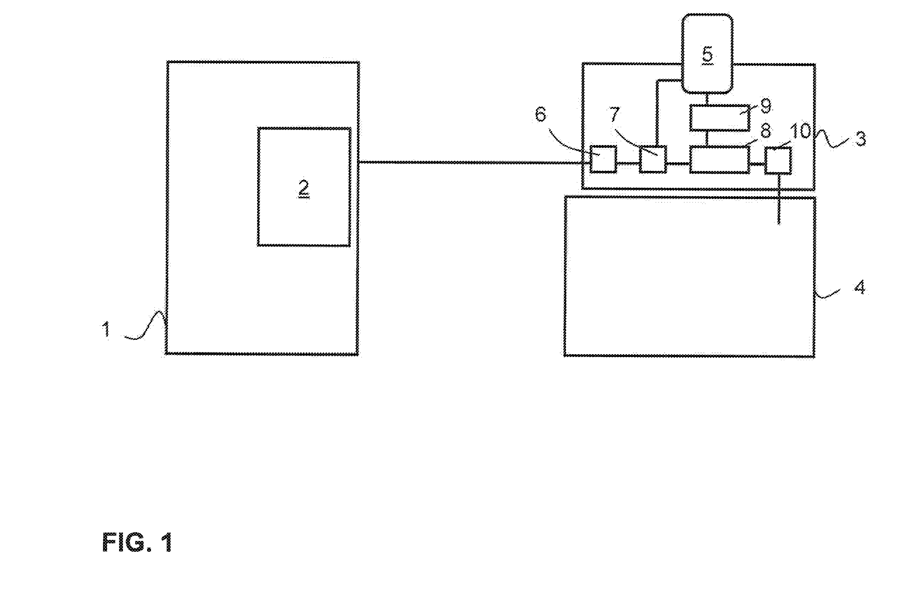

FIG. 1 provides a schematic illustration of a head-end system 1 comprising an encryption system 2 and a content decryption system 3, e.g. a set-top box, according to an embodiment of the invention.

The head-end system 1 may ba in accordance with the Simulcrypt standard for Digital Video Broadcasting. A head-wend system is but one example of a system for providing scrambled data. The head-end system 1 shown in Fig. 1 provides a stream of data packets that is broadcast. Whereas the head-end system 1 is typically employed to broadcast transport stream packets in accordance with the MPEG-2 systems standards (International Standard ISO/IEC 13818-1) via a terrestrial, satellite or cable broadcast system, the methods outlined herein may also be employed to provide scrambled data in Internet Protocol (IP) packets for broadcasting, multicasting or point-to-point communication to receivers in a suitable network.

"Digital Video Broadcasting (DVB); Support for use of scrambling and Conditional Access (CA) with digital broadcasting systems", ETSI Technical Report ETR 289, October 1996 is a technical report that addresses the addition of Conditional Access (CA) elements to international standard ISO/IEC 13818-1 (MPEG-2). The scrambling algorithm operates on the payload of a Transport Stream (TS) packet in the case of TS-level scrambling. A structuring of PES packets is used to implement PES-level scrambling with the same scrambling algorithm. The Program Specific Information (PSI) part of the PEG-2 specification contains syntactical elements defining where to find CA system information. The CA table and the Program Map Table (PMT) contain CA descriptors which have a CA PID field to reference PID values of TS packets that are used to carry CA information such as EMMs (Entitlement Management Messages) and ECMs (Entitlement Control Messages). For applications that scramble MPEG-2 Sections, the scrambling of Sections is at the TS level and signalled by scrambling control field bits. The MPEG-2 Systems specification contains a scrambling control field of two bits, both in the TS packets header and the in the PEWS (Program Elementary Stream) header. The first scrambling control bit indicates whether or not the payload is scrambled. The second bit indicates the use of Even or Odd Key.

As illustrated in FIG. 1, the receiving side comprises the content decryption device 3 in communicative connection with a content rendering device 4, such as a television. A secure module 5, hereinafter also referred to as smart card 5, is communicatively connected to the content decryption device 3.

Content decryption device 3 comprises a signal input 6 for receiving the broadcast signal from the head-end 1. The broadcast signal, comprising encrypted content data and conditional access data, is first demodulated and digitized. Signal input 6 is connected to a demultiplexer 7 configured for separating the signal and for transferring at least a part of the conditional access data to the smart card 5. The encrypted content data is fed to a hardware decrypter 8 (or a software decrypter with hardware acceleration) that, upon receiving the correct decryption keys, may provide decrypted content data to the content rendering device 4, possibly after processing in a decompression means 10.

It should be noted that one or more of the above means may be installed in the content rendering device 4, e.g. the signal input 6 and the decompression means 10. Content decryption device 3 may also be part of the content rendering device 4.

In order to provide the correct decryption keys to the decrypter 8, the content decryption device 3 comprises a key provider 9. Key provider 9 is configured for receiving a first key from the smart card 5 and for providing one or more second keys, hereinafter also referred to as control words (CWs), to the decrypter 8 using the one or more first keys to allow the decrypter 8 to decrypt the encrypted content data.

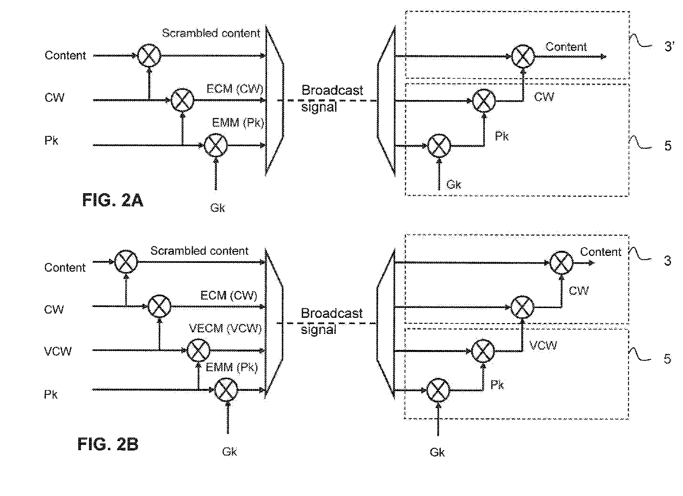

Below, an embodiment of the invention will be described in further detail with reference to FIGS. 2A-FIG. 5, wherein both the first and second keys are included in the broadcast signal received at the signal input 6 of the content decryption device 3. However, it should be appreciated that alternative methods and systems have been envisaged that would fall within the scope of the present invention, such as embodiments wherein the broadcast signal is free of second keys (CW's).

As an example, in such embodiments, both the encryption system 2 and the content decryption device 3 comprise a processor (not shown) capable of running corresponding and synchronized predetermined algorithms for deriving one or more of the second keys in dependence of one or more of the first keys received from the smart card 5. For example, first entitlement control messages can be generated in the encryption system 2 comprising one or more of the first keys. These first keys are also used in the encryption system 2 as input to the predetermined algorithm to obtain the second keys. These second keys can be used for encrypting the content data. A transmitter in the head-end system 1 then transmits a broadcast signal comprising the encrypted content data and first entitlement control messages carrying the first keys. This broadcast signal is received at the signal input 6 and the first entitlement control messages are transferred to the smart card 5 using demultiplexer 7. Smart card 5 extracts the first keys from the first entitlement control messages and provides these first keys to the key provider 9. Control decryption device, e.g. key provider 9, running an algorithm corresponding to that at the head-end side, generates the second keys on the basis of the first keys. The second keys may then be used by decrypter 8 to decrypt the encrypted content data.

This process may be implemented in a variety of ways. Examples include where the first key is used as a seed for a Pseudo Random Number Generator in the content decryption device 3 to generate a sequence of second keys. Alternatively, the first key is subjected to a transformation function, operating in the content decryption device 3, to produce one or more second keys. Successive (groups of) second keys may result from using different transformations. Moreover, the first key may be transformed in the content decryption device 3 by combining it with data from the signal (e.g. a code book where the first key is used to pick a second key, or a bit vector which is XOR-ed with the first key), wherein the predetermined algorithm is used to locate the appropriate parts of the content data using the first key as a parameter.

A more detailed embodiment according to the invention will now be discussed with reference to FIGS. 2A-5. In this embodiment, the broadcast signal comprises messages comprising fist keys (abbreviated as virtual control words VCW's), referred to as first entitlement control messages or virtual entitlement control messages (VECM's) as well as messages comprising second keys (the conventional CW's), referred to in the conventional manner as entitlement control messages (ECM's).

FIG. 2A depicts a prior art key layer stack, known as such, wherein content data is scrambled using control words CW's. The control words CW are included in the broadcast signal by means of ECM's, encrypted under a session key or product key Pk. Entitlement management messages, encrypted under a group key Gk, comprise a session key or product key Pk and entitlements indicating authorisations of a subscriber assigned to smart card 5. At the receiving side, encrypted content is received and the ECM's are transferred to the smart card 5. In the smart card 5, it is verified whether the subscriber is authorised to decrypt the encrypted content using the entitlements stored on the smart card. If so, the product key Pk is used to decrypt the ECMs to obtain the CW's. The CW's are then transferred to a content decryption device 3' where the encrypted content data is decrypted using the CW's. If the control words CW change, as happens frequently, processing power of the smart card 5 is required to provided the new CW's to the content decryption device 3'.

FIG. 2B illustrates a key layer stack according to an embodiment of the invention. It should be noted that the smart card 5 does not need to be modified when compared to the prior art smart card 5. The smart card 5 has no knowledge whether or not the output keys are used to decrypt the encrypted content data directly or not.

Again, as in the prior art key layer stack, the content data is scrambled using control words CW's (second keys). The control words CW are included in the broadcast signal by means of second ECM's (second entitlement control messages). Then, an additional layer is added to the key layer stack to make access to the content data more difficult, i.e. to improve security. This additional layer uses a virtual control word (VCW, first key) to encrypt the second BCM's and provides for sending a first or virtual entitlement management message (VECM) comprising the VCW in the broadcast signal. The VECM is encrypted using the product key Pk. Entitlement management messages, encrypted under a group key Gk, comprise a session key or product key Pk and entitlements indicating authorisations of a subscriber assigned to smart card 5.

At the receiving side, encrypted content is received and the VECM's are transferred to the smart card 5, using demultiplexer 7, whereas the second ECM's, containing the control words CW for decrypting the encrypted content data are not transferred to the smart card 5. These conventional ECM's remain in the content decryption device 3 and may be transferred to the key provider 9. In the smart card 5, it is verified whether the subscriber is authorised to decrypt the encrypted content using the entitlements stored on the smart card. If so, the product key Pk is used to decrypt the VECMs to obtain the VCW's. The VCM's are then transferred to the content decryption device 3 or, more specifically, to the key provider 9. Key provider 9 then retrieves the ECM's from the broadcast signal, using the first keys/VCW's, to produce the CW's. The CW's may then be used again for decrypting the encrypted content data in the decrypter 8.

It should be noted that, before transferring the VCW to the content decryption device 3, it may be encrypted in order to avoid easy interception of the VCW. Decryption of the VCW may then be applied in the content decryption device 3.

It is particularly advantageous that the key layer stack of FIG. 2B allows for an increased cycling rate of the second keys without requiring additional computing resources from the smart card 5. This is a result of providing the CW's from the content decryption device 3 instead of from the smart card 5. As an example, the VCW's may be cycled every ten seconds, whereas two or more, e.g. four, different CW's may be used for decrypting the encrypted content data within this time interval. In other words, a single VCW provided from the smart card 5 to the key provider 9 may result in retrieving multiple CW's from the broadcast signal that may be used in the decryption process. The increased cycling rate of the second keys greatly improves security while not claiming considerable computing resources from the smart card 5.

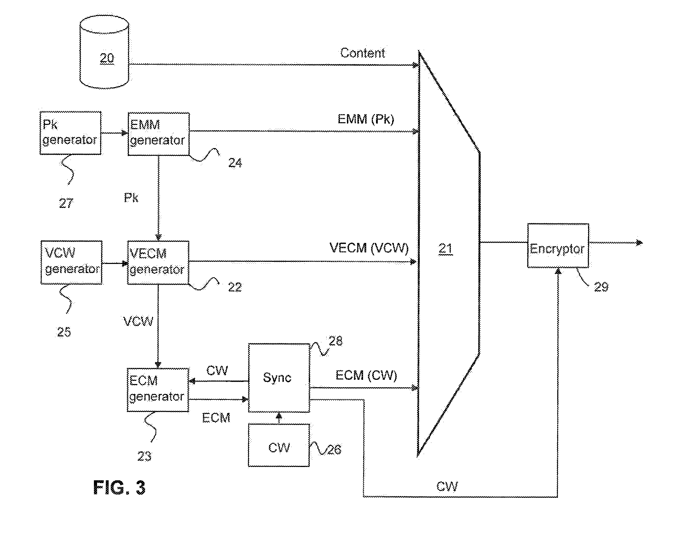

FIG. 3 provides a schematic embodiment of the head-end system 1 for implementing the key layer stack of FIG. 2B. A storage system 20 is arranged to provide one or more elementary streams of content data belonging to a program. These elementary streams comprise components such as the video and audio elements of the program. A program in this context is a collection of data streams. Those of the data streams provided with a time base have a common time base and are intended for synchronised presentation as indicated by timing information in the elementary streams.

A multiplexing system 21 performs time multiplexing of input data and provides an MPEG-2 transport stream as output. The MPEG-2 transport stream is formed by a sequence of Transport Stream packets (TS packets) having a header and a payload, the payload carrying units of data from a particular elementary stream.

Besides the elementary stream from the storage system 20, the multiplexing system 21 receives a stream of first or virtual Entitlement Control Messages (VECMs) from a VECM generator 22, a stream of second Entitlement Control Messages (ECM's) for ECM generator 23 and a stream of Entitlement Management Messages (EMMs) from an EMM generator 24.

The head-end system 1 further includes a VCW generator 25 and a CM generator 26 for generating a sequence of first and second encryption keys, respectively, referred to herein as VCW's and CW's. Pk generator 27 provides product keys Pk. A network management system (not shown) controls the operation of the various components.

The CW's, generated by generator 26 are provided to a synchronisation system 28. The Synchronisation system 28 provides the CW's to the ECM generator 23, receiving the ECM's in return.

The synchronisation system 27 also provides the control words to a scrambling system 29, which scrambles the MPEG-2 transport stream obtained as output from the multiplexing system 21. One function performed by the synchronisation system 28 is to synchronise the stream of ECMs with the scrambled MPEG-2 transport stream in a known manner. Synchronisation can be affected by means of time stamps in the MPEG-2 TS packets, thereby providing the TS packets carrying the EGM's and the scrambled TS packets with a common time base. Synchronisation may be effected by the order in which the streams of TS packets carrying the ECM' s and the scrambled TS packets are multiplexed, in combination with a system for maintaining the order of TS packets in the multiplex. It is observed that, in other embodiments, one or more of the key messages are played out over a separate channel, and that a reference time is used to synchronism the stream of key messages with the stream of scrambled data units.

In the illustrated implementation of FIG. 3, the VECMs carry data representative of the VCW's and encrypted under a product key Pk. The VECM generator 22 obtains the product key Pk from the EMM generator 24, which includes the product keys in EMMs addressed to subscribers or groups of subscribers. The EMMs are sent to subscribers in a known manner in the MPEG-2 transport stream produced by the multiplexing system 21. The ECMs carry data representative of the CW's and encrypted under the VCW. The ECM generator 23 obtains the key VCW from the VECM generator 22, which includes the VCW's in VECMs.

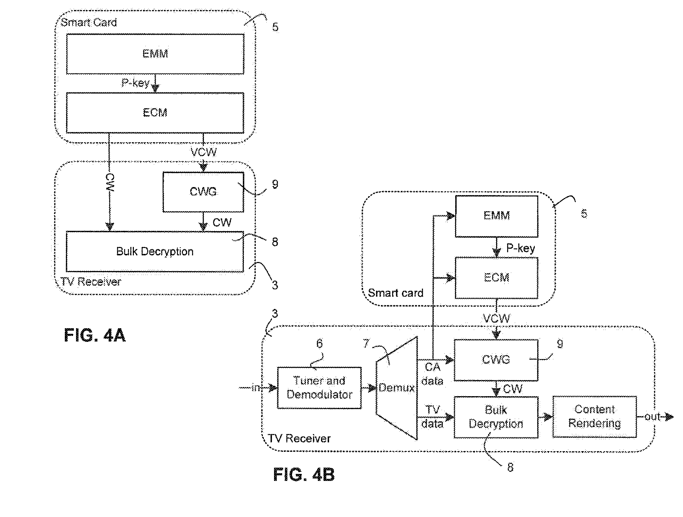

FIGS. 4A and 4B are schematic illustrations of a content decryption device 3 as depicted in FIG. 1 according to an embodiment of the invention. Identical reference numbers indicate identical components of the device. Indeed, conditional access data are split within the content decryption device 3, transferring the VECM's to the smart card 5, while feeding the ECM's carrying the CW's directly to the key provider 9. EMM's carrying the product key Pk are also transferred to the smart card 5.

If a viewer is entitled to watch a particular program, product key Pk is obtained within the smart card 5 by means of which subsequently the first keys (VCW's) can be retrieved from the VECW's within the smart card 5.

The VCW's then transferred over the interface between the smart card 5 and the content decryption device 3 and processed in the key provider 9 to obtain the CW's from the ECM's that were fed directly to the key provider 9. One VCW can be used to obtain multiple CW's, thereby enabling an increased cycling rate.

As shown in FIG. 4A, VCW's can also be fed directly to the decrypter 8 in order for the content decryption device to facilitate legacy encryption systems.

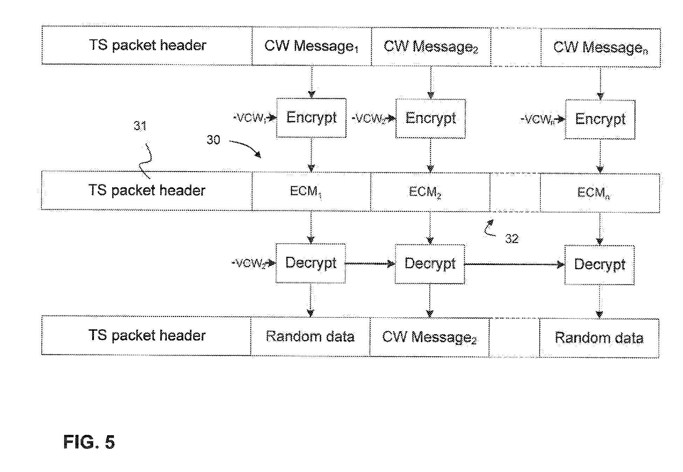

Finally, FIG. 5 schematically illustrates a method of encrypting and decrypting a. single TS data packet 30 of the signal of the encryption system of FIG. 3 according to an embodiment of the invention.

TS packet 30 of FIG. 5 represents a series of combined ECM's according to an embodiment of the invention for including in the broadcast signal.

The TS packet 30 has a header 31 and a payload 32.

The header 31 comprises various information for processing the TS packet in the content decryption device 3.

The payload 32 contains a plurality of control words CW wherein each control word CW is encrypted by the encryption system 2 using a different VCW. That is, CW1 has been encrypted usinG VCW1, CW2 using VCW2, CW3 using VCW3 etc. It should be noted that, to enhance e.g. the key cycling rate of CW's, multiple CW's may be encrypted using a single VCW.

The TS data packet 30 comprising multiple ECM's is then tranferred in the multiplex to the content decryption device 3. The ECM's may e.g. comprise a header with a sync pattern, that can be used for recognizing an ECM, and a scrambling key indicator identifying the VCW used for scrambling the ECM.

At the content decryption device 3, a special method is obtained in order to derive the valid control words CW from the ECM. Traditionally, one would first search for the relevant ECM's using header information and then, subsequently, the obtained ECM's would be encrypted using the corresponding key VCW. However, in the method depicted in FIG. 5, the complete payload 32 is first decrypted under a key, here VCW2. VCW2 is indirectly selected by a viewer of the rendering device 4 by selecting a program that requires VCW2 for decryption (using the CW's corresponding to VCW2).

Since only ECM2 has been encrypted using VCW2 from the smart card 5, only the part corresponding to ECM2 yields CW2 after decryption as the output from key provider 9. Using VCW2 for the other ECM's only yield random data. CW2 can be found by some post-processing on the basis of e.g a recognizable pattern in e.g. a header of the control word (not individually shown). If VCW2 would be used for encrypting multiple ECM's carrying multiple control words for enhanced key cycling, multiple control words would have been obtained using this process.

It is noted that in FIG. 5, encryption and decryption using a generic block cipher algorithm is illustrated for clarification purposes. However, encryption system 2 and decrypter 8 may, of course, be implemented using more advanced cryptographic operation, such as cypher block chaining. For ciphers employing feedback, the encryption process may need to obtain the appropriate chaining information before encrypting the ECM with the appropriate VCW and might involve decrypting the already encrypted part of the message to obtain the relevant chaining data.

Combinations of cryptographic algorithms may also be used.

## Claims

1. A content decryption device for receiving a signal comprising content data and conditional access data, said conditional access data comprising one or more first keys and said content data being encrypted using one or more second keys, said device being configured for communicating with a secure module and comprising:
a signal input for receiving said signal;
- means for providing at least a portion of said conditional access data to said secure module to obtain said one or more first keys from said conditional access data;
- a decrypter comprising a signal input for receiving at least said encrypted content data and being configured for decrypting said encrypted content data under said one or more second keys to provide decrypted content data,
wherein said device comprises a key provider configured for receiving said one or more first keys from said secure module and for providing said one or more second keys to said decrypter using said one or more first keys.

2. The content decryption device according to claim 1, wherein said key provider is configured for receiving a first amount of first keys from said smart card and for providing a second amount of second keys to said decrypter, wherein said second amount of second keys is larger than said first amount of first keys.

3. The content decryption device according to claim 1 or 2, wherein said conditional access data comprises encrypted second keys and wherein said key provider is configured for receiving said conditional access data comprising said encrypted second keys and wherein said key provider is configured for decrypting said encrypted second keys under said one or more first keys to obtain said one or more decrypted second keys and for providing said one or more decrypted second keys to said decrypter for decrypting said content data.

4. The content decryption device according to claim 3, wherein said conditional access data comprises at least one encrypted data packet, said encrypted data packet comprising a plurality of second keys, one or more of said second keys being encrypted under a different first key, wherein said key provider is configured for decrypting said encrypted data packet using said first key and to subsequently select said one or more second keys corresponding to said used first key for providing said one or more selected second keys to said decrypter.

5. The content decryption device according to claim 1 or 2, wherein said conditional access data is free of said second keys and wherein said content decryption device is configured for generating said one or more of said second keys in response to receiving said one or more first keys from said secure module.

6. The content decryption device according to one or more of the preceding claims, wherein said decrypter is further configured for also receiving said one or more second keys from said secure module.

7. The content decryption device according to claim 6, wherein said device is further configured for receiving information from at least one of the signal and the secure module whether said second keys for decrypting said content data originate from said key provider or directly from said secure module.

8. A method of decrypting encrypted content data in a content decryption device, comprising the steps of:
- receiving a signal comprising conditional access data comprising one or more first keys and said content data encrypted under one or more second keys;
- providing at least a portion of said conditional access data to a secure module;
- receiving, in said content decryption device, said one or more first keys from said secure module and providing, using said one or more first keys, said one or more second keys to an decrypter of said content decryption device;
- decrypting, in said decrypter, said encrypted content data under said one or more second keys

9. An encryption system for providing a signal comprising encrypted content data, encrypted under one or more second keys, and conditional access data, comprising one or more first keys, to the content decryption device according to one or more of the preceding claims, said content decryption device being configured for communicating with a secure module, said encryption system comprising:
- an entitlement management message generator configured for generating entitlement management messages comprising one or more third keys for said secure module, said one or more third keys allowing said secure module to obtain said first keys;
- a first key generator configured for generating first keys;
- a first entitlement control message generator configured for generating first entitlement control messages comprising one or more of said first keys;
- a second key generator configured for generating second keys;
- a second entitlement control message generator configured for generating second entitlement control messages comprising one or more of said second keys, said second keys being encrypted under said first keys;
- an encrypter for encrypting said content data under said second keys;
- a transmitter for transmitting said signal to said content decryption device, said signal comprising said encrypted content data and said first and second entitlement control messages.

10. The encryption system according to claim 9, wherein said encryption system is configured for cycling said first key at a first rate and for cycling said second key at a second rate, wherein said first rate is lower than said second rate.

11. The encryption system according to claim 9 or 10, wherein said system is configured for providing at least one encrypted data packet for said signal, said encrypted data packet comprising a plurality of said second keys, each second key being encrypted under a different first key.

12. A method of providing a signal comprising encrypted content data, encrypted under one or more second keys, and conditional access data, comprising one or more first keys, to a content decryption device according to one or more of the preceding claims 1-7, said content decryption device being configured for communicating with a secure module, said method comprising the steps of:
- generating entitlement management messages comprising one or more third keys for said secure module, said one or more third keys allowing said secure module to obtain said one or more first keys;
- generating one or more first entitlement control messages comprising one or more of said first keys;
- generating one or more second entitlement control messages comprising one or more of said second keys, said second keys being encrypted under said first keys;
- encrypting said content data under said second keys;
- transmitting said signal to said content decryption device, said signal comprising said encrypted content data and said first and second entitlement control messages.

13. An encryption system for providing a signal comprising encrypted content data and conditional access data to the content decryption device according to one or more of the preceding claims, said content decryption device being configured for communicating with a secure module and for generating one or more second keys in accordance with a predetermined algorithm for decrypting said encrypted content data, said encryption system comprising:
- a first key generator configured for generating first keys;
- means for running said predetermined algorithm to obtain said one or more second keys, using said first keys;
- a first entitlement control message generator configured for generating first entitlement control messages comprising one or more of said first keys;
- an encrypter for encrypting said content data under said second keys
- transmitting means for transmitting said signal, said signal being free of said second keys.

14. A method of providing a signal comprising encrypted content data, encrypted under one or more second keys, and conditional access data, comprising one or more first keys, from an encryption system, said encryption system being configured for running a predetermined algorithm, to a content decryption device according to one or more of the preceding claims 1-7, said content decryption device being configured for communicating with a secure module and for generating one or more second keys in accordance with said predetermined algorithm for decrypting said encrypted content data, said method comprising the steps of:
- generating first entitlement control messages comprising one or more of said first keys;
- running said predetermined algorithm to obtain said one or more second keys, using said one or more first keys;
- encrypting said content data under said second keys
- transmitting said signal, said signal being free of said second keys.

15. A data packet comprising a plurality of second keys configured for decrypting a part of a broadcast signal, wherein at least two of said second keys have been encrypted under different first keys.
